# EUROPEAN PATENT SPECIFICATION

(11) **EP 3 681 144 B1**
(45) Date of publication and mention of the grant of the patent: **16.02.2022**
(21) Application number: 18878950.7
(22) Date of filing: 14.09.2018
(51) Int. Cl.: H04N 5/272, H04N 5/232, G11B 27/031, G11B 27/28, G06T 19/00, G06K 9/00, G06K 9/46, G06T 7/11, G06T 7/194, G06Q 30/02

(54) **VIDEO PROCESSING METHOD AND APPARATUS BASED ON AUGMENTED REALITY, AND ELECTRONIC DEVICE**
VIDEOVERARBEITUNGSVERFAHREN UND -VORRICHTUNG AUF BASIS VON ERWEITERTER REALITÄT UND ELEKTRONISCHE VORRICHTUNG
PROCÉDÉ ET APPAREIL DE TRAITEMENT VIDÉO BASÉS SUR LA RÉALITÉ AUGMENTÉE ET DISPOSITIF ÉLECTRONIQUE

(30) Priority: 15.11.2017 CN 201711129714
(43) Date of publication of application: 15.07.2020
(73) Proprietor: Advanced New Technologies Co., Ltd., George Town, Grand Cayman KY1-9008 (KY)
(72) Inventor: YUAN, Feihu, Hangzhou, Zhejiang 311121 (CN); YU, Longfei, Hangzhou, Zhejiang 311121 (CN); LIU, Huan, Hangzhou, Zhejiang 311121 (CN)
(74) Representative: Goddar, Heinz J.
(86) International application number: PCT/CN2018/105774
(87) International publication number: WO 2019/095830

(56) References cited:
- EP-A1- 2 896 200
- CN-A- 103 559 713
- CN-A- 105 681 684
- CN-A- 106 204 426
- CN-A- 106 548 185
- CN-A- 106 664 376
- CN-A- 107 920 202
- JP-A- 2014 211 879
- KR-A- 20110 119 146
- US-A1- 2009 289 956
- US-A1- 2014 253 743
- US-A1- 2014 328 574
- US-A1- 2015 348 329

## Description

### Technical Field

The specification relates to the field of augmented reality (AR) technology, and in particular, to a video processing method and apparatus based on augmented reality and an electronic device.

### Background

AR is a technology for adding a virtual model to an image captured by a camera module of a device. The AR technology can superimpose a virtual model and a real environment on the same image so that the two co-exist, thereby bringing users a sensory experience beyond the reality.

US 2015/348329 A1 discloses: A system and method for providing augmented reality on a mobile device is herein disclosed. According to one example, the computer-implemented method includes providing a targeting advice area in a camera preview of an application running on a user device and recognizing a target using the targeting advice area. The computer-implemented method further provides an event via the camera preview based on a target recognition.

US 2014/253743 A1 discloses: The systems and methods allow users of mobile computing devices to generate augmented reality scenarios. Augmented reality content is paired with a real world trigger item to generate the augmented reality scenario. The augmented reality content is overlaid onto frames on a video when a trigger item is detected. Each mobile computing device may have an augmented reality application resident on the mobile computing device to allow a user to generate the augmented reality scenarios.

EP 2 896 200 A1 discloses: An augmented reality experience is provided to a user of a hand held device, such as a mobile phone, which incorporates an electronic processor, a camera and a display. In particular, images taken from video footage are displayed in a display of a hand held device together with a live camera view, to create the illusion that the subject of the video - ie the virtual moving image - is present in the field of view of the camera in real time. In this context the term "real world" image means an image taken from reality, such as a physical, real-world scenario using an electronic photo-capture technique, e.g. video recording. A camera of a hand held device is aimed at a well-known object, which is recognizable to the device. A moving virtual image of an actor playing the part of an historical figure, chosen because of its relevance to the object, is displayed.

KR 2011 0119146 A discloses: An apparatus and method for providing augmented reality is provided to reduce the size of virtual video file without generating a loss. CONSTITUTION: A virtual image processing unit restores a virtual image file into an original virtual image data. The virtual image file comprises a compressed color information data and a lossless compressed transparency information data. A graphic control unit overlaps the restored original copy virtual video data to an actual video data. The graphic control unit creates an augmented reality screen. A display unit outputs the created augmented reality screen.

US 2014/328574 A1 discloses: Systems, apparatuses, methods, and computer program products perform image and audio processing in a real-time environment, in which an overlay alpha-channel video is composited onto a camera stream received from a capture device, and in which an audio stream from a capture device is mixed with audio data are output to a storage file.

US 2009/289956 A1 discloses methods and apparatus for implementing a reality overlay device. A reality overlay device captures information that is pertinent to physical surroundings with respect to a device, the information including at least one of visual information or audio information. The reality overlay device may transmit at least a portion of the captured information to a second device. For instance, the reality overlay device may transmit at least a portion of the captured information to a server via the Internet, where the server is capable of identifying an appropriate virtual billboard. The reality overlay device may then receive overlay information for use in generating a transparent overlay via the reality overlay device. The transparent overlay is then superimposed via the device using the overlay information, wherein the transparent overlay provides one or more transparent images that are pertinent to the physical surroundings. Specifically, one or more of the transparent images may operate as "virtual billboards." Similarly, a portable device such as a cell phone may automatically receive a virtual billboard when the portable device enters an area within a specified distance from an associated establishment.

CN 105 681 684 A discloses an image real-time processing method based on a mobile terminal and an image real-time processing device based on a mobile terminal. The image real-time processing method comprises the steps of: loading a virtual object which is about to perform effect type augmentation on an image picture in a real scene; calling an image acquisition device of the mobile terminal; utilizing the image acquisition device to acquire the image picture in the real scene; carrying out real-time superposition processing on the acquired image picture and the virtual object to obtain a composite image; and displaying the composite image on a display interface of the mobile terminal. According to the image real-time processing method and the image real-time processing device, more interesting things can be added on the image of the virtual scene by loading the virtual object (such as scenery, animal and cartoon figure which does not exist in the current real scene) which is used for performing effect type augmentation on the real scene, and the interestingness of the obtained real scene is increased.

### Summary

To solve problems existing in related technologies, the specification provides a video processing method, apparatus, and electronic device based on augmented reality.

According to a first aspect of embodiments of the specification, a video processing method based on augmented reality is provided, the method comprising:
receiving a merchant-related image;
acquiring an image captured by a device, and recognizing a target object from the captured image by comparing the captured image with the merchant-related image and recognizing the target object from the captured image according to a result of the comparison, wherein the merchant-related image includes the target object;
searching for a video file corresponding to the target object, wherein the video file has a specified background color and does not carry alpha channel values;
recognizing, with regard to a video frame of the video file, a foreground portion and a background portion of the video frame, and processing the background portion of the video frame to make the background portion of the video frame transparent;
calculating a full alpha channel to make the background portion transparent by using a graphics processing unit, GPU, comprising:
   converting each pixel in a video frame into a YCrCb (YUV color code) format, and calculating a color vector of each pixel;
   calculating a color vector of the specified background color in the same way;
   calculating the distance between the color vector of each pixel and the color vector of the specified background color; and
   first using Clamping to limit within an interval the values of the distances , then using Hermite interpolation
   to interpolate a result, and using the result of the interpolation as alpha values each for a respective pixel; and
   synthesizing, after determining a position of the foreground portion in a currently captured image, the processed video frame with the currently captured image to obtain a synthesized video frame.

Optionally, the recognizing a foreground portion and a background portion of the video frame comprises:
comparing a color vector of the specified background color with color vectors of pixels of the video frame, to recognize the foreground portion and the background portion of the video frame.

Optionally, with regard to a video file not carrying an alpha channel, the processing the background portion of the video frame to make the background portion of the video frame transparent comprises:
configuring, according to pixels corresponding to the foreground portion and pixels corresponding to the background portion, alpha channel values for pixels of the video frame to make the background portion of the video frame with the configured alpha channel values transparent.

Optionally, the steps of recognizing, with regard to a video frame of the video file, a foreground portion and a background portion of the video frame and processing the background portion of the video frame to make the background portion of the video frame transparent is performed by a graphics processor.

Optionally, the method further comprises:
acquiring a virtual component corresponding to the target object; and
the synthesizing, after determining a position of the foreground portion in a currently captured image, the processed video frame with the currently captured image to obtain a synthesized video frame comprises:
   synthesizing, after respectively determining the position of the foreground portion and a position of the virtual component in the currently captured image, the processed video frame and the virtual component with the currently captured image.

According to a second aspect of an embodiment of the specification, a video processing apparatus based on augmented reality and configured to receive a merchant-related image, the apparatus comprising:
an recognizing module, configured to acquire an image captured by a device, and recognize a target object from the captured image by comparing the captured image with the merchant-related image and recognizing the target object from the captured image according to a result of the comparison, wherein the merchant-related image includes the target object;
a searching module, configured to search for a video file corresponding to the target object, wherein the video file has a specified background color and does not carry alpha channel values;
a processing module, configured to recognize, with regard to a video frame of the video file, a foreground portion and a background portion of the video frame, and process the background portion of the video frame to make the background portion of the video frame transparent, wherein the processing module is further configured to:
   calculate a full alpha channel to make the background portion transparent by using a graphics processing unit, GPU, comprising:
      converting each pixel in a video frame into a YCrCb (YUV color code) format, and calculate a color vector of each pixel;
      calculate a color vector of the specified background color in the same way;
      calculate the distance between the color vector of each pixel and the color vector of the specified background color; and
   first use Clamping to limit within an interval the values of the distances , then use Hermite interpolation to interpolate a result, and using the result of the interpolation as alpha values each for a respective pixel; and
   a synthesizing module, configured to synthesize, after determining a position of the foreground portion in a currently captured image, the processed video frame with the currently captured image to obtain a synthesized video frame.

Optionally, the recognizing module is further configured to:
compare a color vector of the specified background color with color vectors of pixels of the video frame, to recognize the foreground portion and the background portion of the video frame.

Optionally, with regard to a video file not carrying an alpha channel, the processing module is further configured to:
configure, according to pixels corresponding to the foreground portion and pixels corresponding to the background portion, alpha channel values for pixels of the video frame to make the background portion of the video frame with the configured alpha channel values transparent.

Optionally, the processing module operates in a graphics processor.

Optionally, the apparatus further comprises:
an acquiring module, configured to acquire a virtual component corresponding to the target object; and
the synthesizing module is further configured to:
   synthesize, after respectively determining the position of the foreground portion and a position of the virtual component in the currently captured image, the processed video frame and the virtual component with the currently captured image.

Optionally, the target object includes a merchant-related image provided in advance by a target merchant; and
the recognizing module is further configured to:
compare the captured image with the merchant-related image and recognize the target object from the captured image according to a result of the comparison.

The technical solutions provided in the embodiments of the specification have the following beneficial effects.

By means of a video processing solution based on augmented reality provided in the embodiments of the specification, when a user films a real environment, a target object in which the user is interested can be recognized from a captured image ; and a video file corresponding to the target object is further searched for. After a background portion of the video file is processed to make the background portion of the video file transparent, the video file can be synthesized onto a video image captured by the user, so that the captured image viewed by the user further includes a non-transparent foreground portion of the video file, thereby achieving a better visual effect and a better augmented reality effect.

It should be understood that the general description above and detailed description below are merely exemplary and illustrative of the specification, which should not be construed as limiting the specification.

### Brief Description of the Drawings

The accompanying drawings herein are incorporated into and constitute a part of the specification, which illustrate embodiments consistent with the specification, and serve to explain the principles of the specification in combination with the specification.
FIG. 1A is a diagram of an application scenario of a video processing method based on augmented reality according to an exemplary embodiment of the specification;
FIG. 1B is a flow chart of a video processing method based on augmented reality according to an exemplary embodiment of the specification;
FIG. 2 is a schematic diagram of video processing based on augmented reality according to an exemplary embodiment of the specification;
FIG. 3 is a hardware structural diagram of an electronic device in which a video processing apparatus based on augmented reality is located according to an embodiment of the specification; and
FIG. 4 is a block diagram of a video processing apparatus based on augmented reality according to an exemplary embodiment of the specification.

### Detailed Description

Exemplary embodiments are described in detail herein, examples of which are illustrated in the drawings. When the following description is related to the drawings, the same numbers in different drawings represent the same or similar elements unless otherwise indicated. The implementation manners described in the following exemplary embodiments do not represent all implementation manners consistent with the specification. Conversely, they are merely examples of apparatuses and methods consistent with some aspects of the specification, as detailed in the attached claims.

Terms used in the specification are only aimed at describing specific embodiments rather than limiting the specification. In the specification and the attached claims, the singular forms "a," "an," and "the" are intended to indicate the plural forms as well, unless the context clearly indicates otherwise. It should also be understood that the term "and/or" used herein refers to and includes any or all possible combinations of one or more associated items listed.

It should be understood that although terms such as first, second, and third may be used in the specification to describe various information, the information should not be limited by these terms. These terms are only used to distinguish one another for information of the same type. For example, without departing from the scope of the specification, first information may also be referred to as second information; and similarly, second information may also be referred to as first information. Depending on the context, the word "if' used herein can be interpreted as "at the time of' or "when" or "in response to determination."

Augmented reality (AR) is a new technology that seamlessly integrates real world information with virtual world information, which can apply virtual information to a real environment by virtue of computer technologies, so that the real environment and a virtual object are superimposed in real time in the same image or in the same space to coexist at the same time.

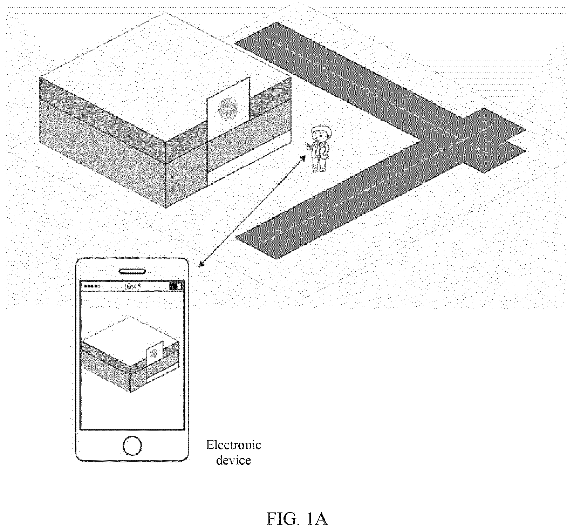

FIG. 1A is a diagram of an application scenario of a video processing method based on augmented reality according to an exemplary embodiment of the specification. In FIG. 1A, a smart mobile phone held by a user features a built-in camera module. The user can hold the smart mobile phone to capture a real environment image in which a target object may interest the user. With respect to the target object, a video that interests the user may be provided. Taking a shopping mall and the like being an application scenario as an example, a merchant may have a video file capturing a product of the merchant, or a video including a spokesperson for the product filmed. If an image of the merchant is taken, the user may have an interest to search for the product or the spokesperson for the product.

In view of this, a video processing solution based on augmented reality is provided in the embodiments of the specification. A target object in which a user is possibly interested can be recognized from a captured image when the user takes images of a real environment, and a video file corresponding to the target object is further searched for. After a background portion of the video file is processed to make the background portion of the video frame transparent, the video file can be synthesized onto a video image captured by the user, so that the captured image viewed by the user further includes a non-transparent foreground portion of the video file, thereby achieving a better augmented reality effect and a better visual effect. The embodiments of the specification are described in detail below.

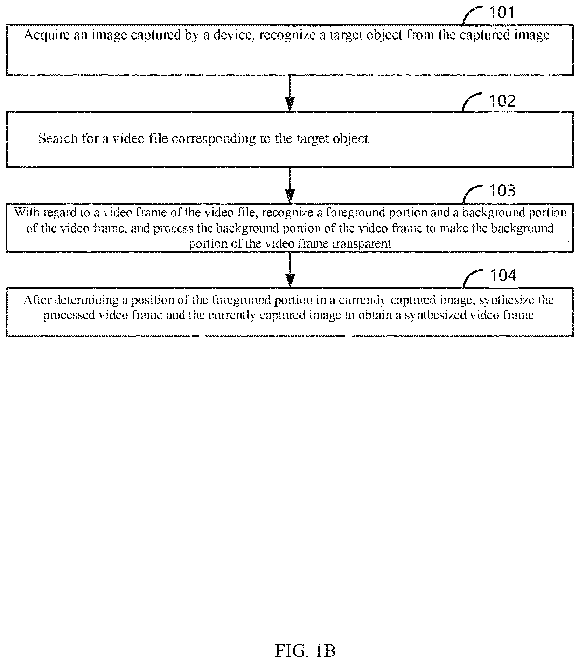

As shown in FIG. 1B, a flow chart of a video processing method based on augmented reality according to an exemplary embodiment of the specification is shown. The video processing method is applicable to an electronic device and comprises the following steps:
In step 101, acquiring an image captured by a device, and recognizing a target object in the captured image.
In step 102, searching for a video file corresponding to the target object.
In step 103, with regard to a video frame of the video file, recognizing a foreground portion and a background portion of the video frame, and processing the background portion of the video frame to make the background portion of the video frame transparent.
In step 104, after determining a position of the foreground portion in a currently captured image, synthesizing the processed video frame with the currently captured image to obtain a synthesized video frame.

Here, the device may be an electronic device with a filming function, such as a smart mobile phone, a tablet, a personal digital assistant, AR glasses, or an AR helmet. The solutions provided in the embodiments of the specification can be applied in various scenarios; and in different application scenarios, the target object in the embodiments of the specification may represent a plurality of different objects. As an example, the solutions of the embodiments of the specification may be applicable to products provided by an AR service provider; and the target object may be specified in advance by the AR service provider. For example, during the Spring Festival holidays, the target object may be an image of a Chinese character "Fu" (meaning blessing and good fortune). When the product provided by the AR service provider is installed on a smart device held by a user, and the image of the Chinese character "Fu" is recognized in an image captured by the smart device held by the user, the AR service provider can provide a corresponding video file, such as a blessing video from a celebrity. The background of the video file is processed to make the background of the video frame transparent and then synthesized with the captured image, enabling the user to view the blessing from the celebrity on the smart device.

In another example, the solutions may also be applied in a merchant scenario, and the target object may include a merchant-related image provided in advance by a target merchant, such as a product image or an identification image of the merchant. Depending on the merchant's desire, the merchant may provide a video file such as a product introduction video, a product promotion video, or a video of a product's spokesperson. After a product or merchant identity is recognized from an image captured by a smart device held by the user, the background of the video file is processed to make the background of the video transparent and then synthesized with the captured image, enabling the user to view the product's description, the product's promotion, or the product's spokesperson on the smart device.

It can be understood that the application scenarios described above are only examples, and the video processing solutions provided in the specification is not limited to the scenarios already described above. In practical applications, the solutions of the specification can be flexibly applied in various scenarios as desired.

Here, data generated during filming by a camera module of the device can be understood as sequences of video frames which are continuously generated and provided to a display module of the device; and the display module displays each frame at a rate of N frames per second. When acquiring the captured image, the device may acquire one video frame, multiple consecutive video frames, or a video file including multiple video frames.

For the captured image, various recognition methods can be used to recognize the target object from the captured image. For example, applicable image recognition algorithms may include, those based on SIFT (Scale-invariant Feature Transform) / SURF (Speed Up Robust Features), based on a Haar-like feature, or based on generalized Hough transformation, etc., which may be flexibly selected according to needs in practical applications and is not limited by the specification.

With respect to providing a related image of the target object, as applied in a merchant scenario where a merchant provides a merchant-related image, recognizing a target object from a captured image comprises:
comparing the captured image with the merchant-related image and recognizing the target object from the captured image according to a result of the comparison.

As an example, the comparison process may be extracting image features of the merchant-related image and image features of the captured image, comparing the features to determine whether the captured image includes the merchant-related image, and then recognizing the target object from the captured image according to a result of the comparison.

Optionally, in the embodiments of the specification, a correspondence between the target object and the video file may be established in advance. After the target object is recognized from the captured image, the video file corresponding to the target object can be located according to the pre-established correspondence. With regard to video files in practical applications, video frames of some video files carry alpha channels (e.g., each alpha channel is an 8-bit grayscale channel, which records transparency information of an image by using 256 levels of grayscale, and defines transparent, non-transparent and translucent areas, where "white" means non-transparent, "black" means transparent, and "grey" means translucent), such as video files in an MOV format (QuickTime movie format, an audio or video file format developed by Apple) or an AVI (Audio Video Interleaved) format. Such video files usually have a large amount of data. Video files also include those that do not carry an alpha channel, such as H264 encoded video files in an MP4 format.

By means of video files with a better compression rate and a smaller amount of data, fast transmission can be achieved. In addition, during video synthesis, it can be ensured that audio portions in a video file are not affected by the synthesis, and thus video frames and audio playback can be in synchrony during subsequent playback.

In a video frame, a foreground portion can be usually distinguished from a background portion. A foreground is a body located in front of a subject in an image and close to a camera lens. A background is a target that is behind the subject and away from the camera. In the embodiments of the specification, the foreground portion, as a portion to be displayed to the user, is to be synthesized onto the captured image, while the background portion serves as a portion that does not need to be displayed to the user and is processed to make the background portion transparent, i.e., processing an original video file to obtain a video file with a transparent background.

In some examples, if a photographer of a video file prepares the video file with a single background color, the background color specified by the photographer of the video file can be acquired before the processing for transparency, pixels with colors different from the background color in the video frames are recognized; and accordingly, the foreground portion and the background portion in the video frames can be distinguished.

In an optional implementation manner, in order to rapidly make the background transparent, the video file may be specified with a background color; and the specified background color may be flexibly determined according to desires, such as green or blue.

For the video file with the specified background color, the recognizing a foreground portion and a background portion of a video frame may comprise:
comparing a color vector of the specified background color with color vectors of pixels of the video frame and recognizing the foreground portion and the background portion of the video frame.

A video file provider may determine the specified background color according to desires, and capture and provide the video file with the specified background color. Therefore, by comparing the color vector of each pixel in the video frame and the color vector of the background color, the foreground portion and the background portion of the video frame can be quickly recognized.

If a photographer does not prepare the video file with a single background color, other methods may be used to distinguish the foreground portion from the background portion. For example, a color vector of a first frame in the video file can be calculated by using a histogram to determine the background portion; or an Alpha Matting technology can be used to distinguish the foreground from the background, and then the background portion is processed to become transparent.

For a video file that carries an alpha channel, alpha channel values of the background portion can be changed after the foreground portion is distinguished from the background portion, to make the background portion transparent. With regard to a video file that does not carry an alpha channel, the processing the background portion of the video frame to make the background portion of the video frame transparent comprises:
configuring, according to pixels corresponding to the foreground portion and pixels corresponding to the background portion, alpha channel values for pixels of the video frame to make the background portion of the video frame configured with the alpha channel values transparent.

In this way, each pixel point carries an alpha channel value, so that the background portion of the video frame can be quickly processed to become transparent without interfering with the original audio portion of the video file.

It should be noted that the above processing process may be handled in advance by a server; or the background portion may be processed by the device to become transparent in a real-time rendering process, so as to achieve the objective of removing the background portion. In an optional implementation manner, a graphics processing unit (GPU) may be used to quickly process video frames. Here, the GPU can convert and drive display information required by a computing device, and provide a line scanning signal to a display screen to control the correct display of the display screen, serving as an important element connecting the display screen with a core processing chip. The GPU processing method can process large-sized video frames, achieve a real-time effect with a small memory footprint, and can achieve a higher speed of rendering in an AR scenario.

The obtained transparent-background video frame can be synthesized with the captured image to obtain a synthesized video frame. The synthesized video frame can be rendered on the display screen of the device; and accordingly, the user can view the captured image with a video rendered. Optionally, before synthesis, the transparent-background video frame can be subject to other related processing. In some examples, the foreground portion may be rotated, scaled, or stretched as desired. In other examples, three-dimensional processing may also be performed. For example, a three-dimensional space plane may be determined according to a three-dimensional effect desired to be displayed, and the processed video frame is rendered onto the three-dimensional space plane to enable the foreground portion to have a three-dimensional effect, such as a shadow effect or a depth-of-field effect.

In an optional implementation manner, in order to further enhance the augmented reality effect of the solutions, a virtual component can be also added to the captured image according to the embodiments of the specification. The virtual component may be in a static form or a dynamic form. A motion state of the virtual component in a dynamic form may be changed by the device according to a set motion rule or adjusted according to changes of some targets recognized from the captured image, or the like. The construction of the virtual component can be flexibly set according to desires, which is not limited by the embodiments. Where the virtual component is involved, the method provided by the embodiments of the specification may further comprise:
acquiring a virtual component corresponding to the target object; and
the synthesizing, after determining the position of the foreground portion in a currently captured image, the processed video frame with the currently captured image comprises:
   synthesizing, after respectively determining the positions of the foreground portion and of the virtual component in the currently captured image, the processed video frame and the virtual component with the currently captured image.

It can be seen that some virtual components can be rendered on the synthesized video frame during synthesis, thereby improving the augmented reality effect.

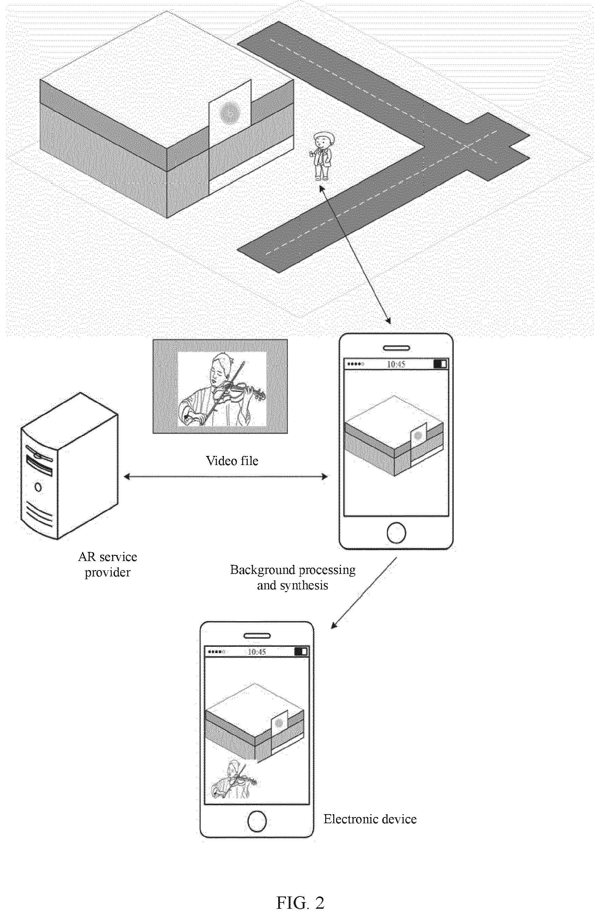

In what follows, the video processing solutions based on augmented reality provided by the specification are described in detail by using embodiments. FIG. 2 is a schematic diagram of video processing based on augmented reality according to an exemplary embodiment of the specification. In the embodiments, the application in a merchant scenario is taken as an example for description. An AR service provider may provide an application (APP) with an AR function to a user, and the user can install the APP on an electronic device.

A merchant can provide the AR service provider with a video file prepared thereby; and the video file relates to a product and a brand of the merchant. The embodiments of the specification use a video file, which can have a high compression rate during transmission, require less traffic, and ensure audio and video synchronization during real-time rendering when being applied in an AR scenario. The video file may be one that does not carry alpha channel values. Such a video file is easy to capture, and has a small data size and a fast transmission speed. Further, in order to process videos more quickly, the AR service provider can specify a background color, and the merchant provides a video file with the specified background color; that is, the background portion of the video file is in a single color. In addition, the merchant can also provide the AR service provider with a merchant-related image so that when an image captured by the user is acquired by the APP, the merchant is recognized in the image.

The AR service provider can acquire a video file and a merchant-related image provided by each merchant and establish a correspondence among the three.

In FIG. 2, a camera module is built in a smart device held by the user, and the user can hold the smart mobile phone to capture an image in a real environment. The APP provided by the AR service provider is installed in the smart device and the smart device can implement the following solutions:
Recognizing a merchant:
Through an image captured by the device, comparing the captured image with the merchant-related image played back in the video of each merchant to recognize the merchants who provides the merchant-related image in the captured image.

Reading video files and configurations:
According to the recognized merchant, searching for a corresponding video file and obtain a background color of the video file.

Reading video frames:
Reading a video file, decoding the video file into video frames, where the video frames may be data in an RGB format, and sending the video frames to a GPU.

Calculating a full alpha channel by using the GPU:
i. converting each pixel in a video frame into a YCrCb (YUV color code) format, and calculating a color vector of each pixel:
   float Y = 0.2989 ^{∗} color.r + 0.5866 ^{∗} color.g + 0.1145 ^{∗} color.b;
   float Cr = 0.7132 ^{∗} (color.r - Y);
   float Cb = 0.5647 ^{∗} (color.b - Y);
   return vec2 (Cr, Cb);
ii. calculating a color vector of the specified background color in the same way;
iii. calculating the distance between the color vector of each pixel and the color vector of the specified background color; and
iv. first using Clamping (an algorithm that limits a numerical value within an interval and uses a boundary value when the numerical value exceeds the boundary) to limit within an interval the values of the distances , then using Hermite (a smooth interpolation algorithm) to interpolate a result, and using the result of the interpolation as alpha values each for a respective pixel.

Performing synthesis:
After the alpha channel value is configured, the background portion of the video frame becomes transparent, while the foreground portion remains unchanged. The video frame obtained in this way can be deemed as a transparent texture carrying an alpha channel. According to desires, the video file can be subject to other related processing. In some examples, the foreground portion may be rotated, scaled, or stretched as desired. In other examples, three-dimensional processing may also be performed. For example, a three-dimensional space plane may be determined according to a three-dimensional effect desired to be displayed, and the processed video frame is rendered onto the three-dimensional space plane to enable the foreground portion to have a three-dimensional effect, such as a shadow effect or a depth-of-field effect.

Finally, the image captured by the camera module and the video frame processed to have a transparent background are processed by alpha synthesis, thereby achieving the objective of merging the foreground portion of the video file with a real environment image captured by using the camera module. Optionally, the merchant may further provide a virtual component based on desires; and the AR service provider can configure some virtual components. During synthesis, the virtual components are rendered onto the synthesized video frame, thereby enhancing the augmented reality effect.

Corresponding to the above-described video processing method embodiments based on augmented reality, the specification further provides a video processing apparatus embodiments based on augmented reality and an electronic device to which the video processing apparatus is applied.

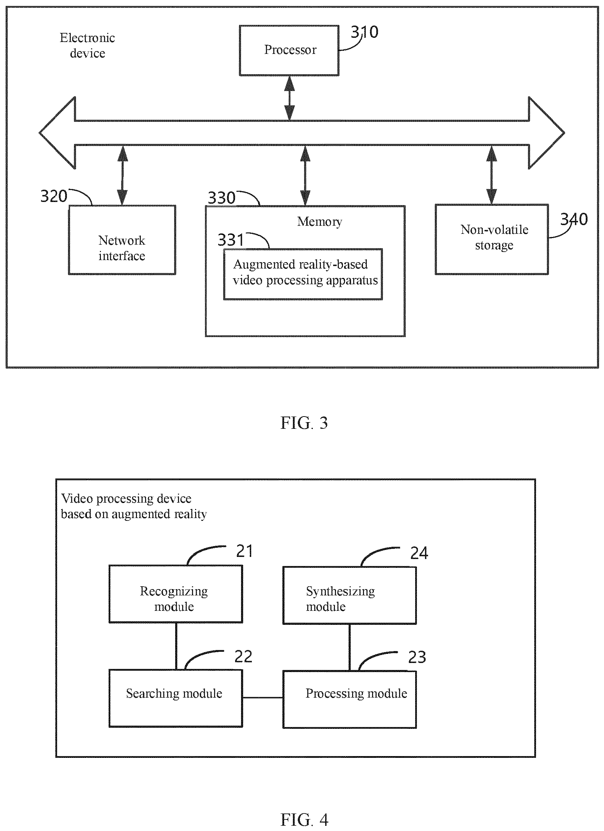

The video processing apparatus embodiments based on augmented reality in the specification are applicable to the electronic device. The apparatus embodiments may be implemented by software, hardware, or a combination of software and hardware. Taking the software implementation as an example, the apparatus in a logical sense is formed by reading, by a video processor based on augmented reality in which the apparatus is located, a corresponding computer program instruction in a non-volatile memory to an internal storage for execution. In the level of hardware, FIG. 3 is a hardware structural diagram of an electronic device in which a video processing apparatus based on augmented reality is located according to the specification. In addition to a processor 310, a memory 330, a network interface 320, and a non-volatile storage 340, as shown in FIG. 3, usually the electronic device in which the apparatus 331 of the embodiments is located may further comprise other hardware depending on actual functions of the electronic device. Details are not elaborated herein.

As shown in FIG. 4, a block diagram of a video processing apparatus based on augmented reality according to an exemplary embodiment of the specification is illustrated. The apparatus comprises:
an recognizing module 41, configured to acquire an image captured by a device, and recognize a target object from the captured image;
a searching module 42, configured to search for a video file corresponding to the target obj ect;
a processing module 43, configured to recognize, with regard to a video frame of the video file, a foreground portion and a background portion of the video frame, and process the background portion of the video frame to make the background portion of the video frame transparent; and
a synthesizing module 44, configured to synthesize, after determining the position of the foreground portion in a currently captured image, the processed video frame with the currently captured image to obtain a synthesized video frame.

Optionally, the video file is a video file with a specified background color; and
the recognizing module is further configured to:
compare a color vector of the specified background color with color vectors of pixels of the video frame, to recognize the foreground portion and the background portion of the video frame.

Optionally, with regard to a video file that does not carry an alpha channel, the processing module is further configured to:
configure, according to pixels corresponding to the foreground portion and pixels corresponding to the background portion, alpha channel values for pixels of the video frame to make the background portion of the video frame with the configured alpha channel values transparent.

Optionally, the processing module operates in a graphics processor.

Optionally, the apparatus further comprises:
an acquiring module, configured to acquire a virtual component corresponding to the target object; and
the synthesizing module is further configured to:
   synthesize, after respectively determining the positions of the foreground portion and of the virtual component in the currently captured image, the processed video frame and the virtual component with the currently captured image.

Optionally, the target object includes a merchant-related image provided in advance by a target merchant; and
the recognizing module is further configured to:
compare the captured image with the merchant-related image and recognize the target object from the captured image according to a result of the comparison.

Correspondingly, embodiments of the specification further provide an electronic device, comprising:
a processor; and
a memory, configured to store processor-executable instructions, wherein
the processor is configured to:
   acquire an image captured by a device, and recognize a target object from the captured image;
   search for a video file corresponding to the target object;
   recognize, with regard to a video frame of the video file, a foreground portion and a background portion of the video frame, and process the background portion of the video frame to make the background portion of the video frame transparent; and
   synthesize, after determining the position of the foreground portion in a currently captured image, the processed video frame with the currently captured image to obtain a synthesized video frame.

For details about the implementation process of functions and effects of each module in the above-described apparatus, see the implementation process of the corresponding steps in the above-described method. Details are not elaborated herein again.

Since the apparatus embodiments basically correspond to the method embodiments, for relevant portions, reference may be made to the descriptions in the method embodiments. The above-described apparatus embodiments are examples. Modules described as separate components may or may not be physically separated, and components displayed as modules may or may not be physical modules; that is, they may be located at one place or be distributed on multiple network modules. Some or all of the modules may be selected according to actual needs to achieve the objectives of the solutions in the specification. Those skilled in the art can understand and implement the solutions without creative efforts.

The embodiments of the specification are described above. Other embodiments are within the scope of the attached claims. In some embodiments, actions or steps in the claims may be performed in a sequence different from that in the described embodiments and the desired results can still be achieved. In addition, the desired results can still be achieved if the processes described in the drawings are not necessarily performed in the illustrated sequence or a continuous sequence. In some implementations, multitasking and parallel processing are also feasible or may be advantageous.

It should be understood that the specification is not limited to the precise structure that has been described above and illustrated in the accompanying drawings, and various modifications and changes can be made without departing from the scope thereof. The scope of the specification is limited merely by the attached claims.

## Claims

1. A video processing method based on augmented reality, comprising:
receiving a merchant-related image;
acquiring (101) an image captured by a device, and recognizing a target object from the captured image by comparing the captured image with the merchant-related image and recognizing the target object from the captured image according to a result of the comparison, wherein the merchant-related image includes the target object;
searching (102) for a video file corresponding to the target object, wherein the video file has a specified background color and does not carry alpha channel values;
recognizing (103), with regard to a video frame of the video file, a foreground portion and a background portion of the video frame, and processing the background portion of the video frame to make the background portion of the video frame transparent;
calculating a full alpha channel to make the background portion transparent by using a graphics processing unit, GPU, comprising:
converting each pixel in a video frame into a YCrCb, YUV color code, format, and
calculating a color vector of each pixel;
calculating a color vector of the specified background color in the same way;
calculating the distance between the color vector of each pixel and the color vector of the specified background color; and
first using Clamping to limit within an interval the values of the distances, then using Hermite interpolation to interpolate a result, and using the result of the interpolation as alpha values each for a respective pixel; and
synthesizing (104), after determining a position of the foreground portion in a currently captured image, the processed video frame with the currently captured image to obtain a synthesized video frame.

2. The method according to claim 1, wherein
the recognizing (103) a foreground portion and a background portion of the video frame comprises:
comparing a color vector of the specified background color with color vectors of pixels of the video frame, to recognize the foreground portion and the background portion of the video frame.

3. The method according to claim 1, wherein with regard to a video file not carrying an alpha channel, the processing the background portion of the video frame to make the background portion of the video frame transparent comprises:
configuring, according to pixels corresponding to the foreground portion and pixels corresponding to the background portion, alpha channel values for pixels of the video frame to make the background portion of the video frame with the configured alpha channel values transparent.

4. The method according to claim 1, wherein the steps of recognizing (103), with regard to a video frame of the video file, a foreground portion and a background portion of the video frame, and processing the background portion of the video frame to make the background portion of the video frame transparent is performed by a graphics processor (310).

5. The method according to claim 1, further comprising:
acquiring a virtual component corresponding to the target object; and
the synthesizing, after determining a position of the foreground portion in a currently captured image, the processed video frame with the currently captured image to obtain a synthesized video frame comprises:
synthesizing, after respectively determining the position of the foreground portion and a position of the virtual component in the currently captured image, the processed video frame and the virtual component with the currently captured image.

6. A video processing apparatus (331) based on augmented reality and configured to receive a merchant-related image, the apparatus comprising:
an recognizing module (41), configured to acquire an image captured by a device, and recognize a target object from the captured image by comparing the captured image with the merchant-related image and recognizing the target object from the captured image according to a result of the comparison, wherein the merchant-related image includes the target object;
a searching module (42), configured to search for a video file corresponding to the target object, wherein the video file has a specified background color and does not carry alpha channel values;
a processing module (43), configured to recognize, with regard to a video frame of the video file, a foreground portion and a background portion of the video frame, and process the background portion of the video frame to make the background portion of the video frame transparent, wherein the processing module is further configured to:
calculate a full alpha channel to make the background portion transparent by using a graphics processing unit, GPU, comprising:
converting each pixel in a video frame into a YCrCb, YUV color code, format, and
calculate a color vector of each pixel;
calculate a color vector of the specified background color in the same way;
calculate the distance between the color vector of each pixel and the color vector of the specified background color; and
first use Clamping to limit within an interval the values of the distances, then use Hermite interpolation to interpolate a result, and using the result of the interpolation as alpha values each for a respective pixel; and
a synthesizing module (44), configured to synthesize, after determining a position of the foreground portion in a currently captured image, the processed video frame with the currently captured image to obtain a synthesized video frame.

7. The apparatus (331) according to claim 6, wherein
the recognizing module (41) is further configured to:
compare a color vector of the specified background color with color vectors of pixels of the video frame, to recognize the foreground portion and the background portion of the video frame.

8. The apparatus (331) according to claim 6, wherein with regard to a video file not carrying an alpha channel, the processing module (43) is further configured to:
configure, according to pixels corresponding to the foreground portion and pixels corresponding to the background portion, alpha channel values for pixels of the video frame to make the background portion of the video frame with the configured alpha channel values transparent.

9. The apparatus (331) according to claim 6, wherein the processing module (43) operates in a graphics processor (310).

10. The apparatus (331) according to claim 6, further comprising:
an acquiring module, configured to acquire a virtual component corresponding to the target object; and
the synthesizing module (44) is further configured to:
synthesize, after respectively determining the position of the foreground portion and a position of the virtual component in the currently captured image, the processed video frame and the virtual component with the currently captured image.

11. The apparatus (331) according to Claim 6, wherein the target object includes a merchant-related image provided in advance by a target merchant; and
the recognizing module (41) is further configured to:
compare the captured image with the merchant-related image and recognize the target object from the captured image according to a result of the comparison.

## Patentansprüche

1. Videoverarbeitungsverfahren, auf erweiterter Realität basierend, Folgendes umfassend:
Empfangen eines händlerbezogenen Bildes,
Erfassen (101) eines Bildes, das durch ein Gerät aufgenommen wird, und Erkennen eines Zielobjekts aus dem erfassten Bild durch Vergleichen des aufgenommenen Bildes mit dem händlerbezogenen Bild und Erkennen des Zielobjekts aus dem aufgenommenen Bild gemäß einem Ergebnis des Vergleichs, wobei das händlerbezogene Bild das Zielobjekt beinhaltet,
Suchen (102) nach einer Videodatei, die dem Zielobjekt entspricht, wobei die Videodatei eine spezifizierte Hintergrundfarbe aufweist und keine Alphakanalwerte mitführt,
Erkennen (103) eines Vordergrundabschnitts und eines Hintergrundabschnitts des Video-Frames in Bezug auf einen Video-Frame der Videodatei und Verarbeiten des Hintergrundabschnitts des Video-Frames, um den Hintergrundabschnitt des Video-Frames transparent zu machen,
Berechnen eines vollständigen Alphakanals, um den Hintergrundabschnitt transparent zu machen, mit Hilfe einer Grafikverarbeitungseinheit, GPU, Folgendes umfassend:
Umwandeln jedes Pixels in einem Video-Frame in ein YCrCb-, YUV-Farbcodeformat und
Berechnen eines Farbvektors jedes Pixels,
Berechnen eines Farbvektors der spezifizierten Hintergrundfarbe auf die gleiche Weise,
Berechnen des Abstandes zwischen dem Farbvektor jedes Pixels und dem Farbvektor der spezifizierten Hintergrundfarbe und
zuerst Verwenden eines Clampings, um die Werte der Abstände in einem Intervall zu begrenzen, dann Verwenden einer Hermite-Interpolation, um ein Ergebnis zu interpolieren, und Verwenden des Ergebnisses der Interpolation als Alphawerte jeweils für ein entsprechendes Pixel,
und
Synthetisieren (104), nach dem Bestimmen einer Position des Vordergrundabschnitts in einem gegenwärtig aufgenommenen Bild, des verarbeiteten Video-Frames mit dem gegenwärtig aufgenommenen Bild, um einen synthetisierten Video-Frame zu erzielen.

2. Verfahren nach Anspruch 1, wobei
das Erkennen (103) eines Vordergrundabschnitts und eines Hintergrundabschnitts des Video-Frames Folgendes umfasst:
Vergleichen eines Farbvektors der spezifizierten Hintergrundfarbe mit Farbvektoren von Pixeln des Video-Frames, um den Vordergrundabschnitt und den Hintergrundabschnitt des Video-Frames zu erkennen.

3. Verfahren nach Anspruch 1, wobei das Verarbeiten des Hintergrundabschnittes des Video-Frames, um den Hintergrundabschnitt des Video-Frames transparent zu machen, in Bezug auf eine Videodatei, die keinen Alphakanal mitführt, Folgendes umfasst:
Konfigurieren von Alphakanalwerten für Pixel des Video-Frames gemäß Pixeln, die dem Vordergrundabschnitt entsprechen, und Pixeln, die dem Hintergrundabschnitt entsprechen, um den Hintergrundabschnitt des Video-Frames mit den konfigurierten Alphakanalwerten transparent zu machen.

4. Verfahren nach Anspruch 1, wobei die Schritte des Erkennens (103) eines Vordergrundabschnitts und eines Hintergrundabschnitts des Video-Frames in Bezug auf einen Video-Frame der Videodatei und des Verarbeitens des Hintergrundabschnitts des Video-Frames, um den Hintergrundabschnitt des Video-Frames transparent zu machen, von einem Grafikprozessor (310) ausgeführt werden.

5. Verfahren nach Anspruch 1, ferner Folgendes umfassend:
Erfassen einer virtuellen Komponente, die dem Zielobjekt entspricht, und
das Synthetisieren, nach dem Bestimmen einer Position des Vordergrundabschnitts in einem gegenwärtig aufgenommenen Bild, des verarbeiteten Video-Frames mit dem gegenwärtig aufgenommenen Bild, um einen synthetisierten Video-Frame zu erzielen, Folgendes umfasst:
Synthetisieren, nach jeweiligem Bestimmen der Position des Vordergrundabschnitts und einer Position der virtuellen Komponente in dem gegenwärtig aufgenommenen Bild, des verarbeiteten Video-Frames und der virtuellen Komponente mit dem gegenwärtig aufgenommenen Bild.

6. Videoverarbeitungsvorrichtung (331), auf erweiterter Realität basierend und dafür konfiguriert, ein händlerbezogenes Bild zu empfangen, wobei die Vorrichtung Folgendes umfasst:
ein Erkennungsmodul (41), das dafür konfiguriert ist, ein Bild zu erfassen, das von einem Gerät aufgenommen wurde, und aus dem aufgenommenen Bild durch Vergleichen des aufgenommenen Bildes mit dem händlerbezogenen Bild ein Zielobjekt zu erkennen und das Zielobjekt aus dem aufgenommenen Bild gemäß einem Ergebnis des Vergleichs zu erkennen, wobei das händlerbezogene Bild das Zielobjekt beinhaltet,
ein Suchmodul (42), das dafür konfiguriert ist, nach einer Videodatei zu suchen, die dem Zielobjekt entspricht, wobei die Videodatei eine spezifizierte Hintergrundfarbe aufweist und keine Alphakanalwerte mitführt,
ein Verarbeitungsmodul (43), das dafür konfiguriert ist, in Bezug auf einen Video-Frame der Videodatei einen Vordergrundabschnitt und einen Hintergrundabschnitt des Video-Frames zu erkennen und den Hintergrundabschnitt des Video-Frames zu verarbeiten, um den Hintergrundabschnitt des Video-Frames transparent zu machen, wobei das Verarbeitungsmodul ferner für Folgendes konfiguriert ist:
Berechnen eines vollständigen Alphakanals, um den Hintergrundabschnitt transparent zu machen, mit Hilfe einer Grafikverarbeitungseinheit, GPU, Folgendes umfassend:
Umwandeln jedes Pixels in einem Video-Frame in ein YCrCb-, YUV-Farbcodeformat und
Berechnen eines Farbvektors jedes Pixels,
Berechnen eines Farbvektors der spezifizierten Hintergrundfarbe auf die gleiche Weise,
Berechnen des Abstandes zwischen dem Farbvektor jedes Pixels und dem Farbvektor der spezifizierten Hintergrundfarbe und
zuerst Verwenden eines Clampings, um die Werte der Abstände in einem Intervall zu begrenzen, dann Verwenden einer Hermite-Interpolation, um ein Ergebnis zu interpolieren, und Verwenden des Ergebnisses der Interpolation als Alphawerte für jeweils ein entsprechendes Pixel,
und
ein Synthesemodul (44), das dafür konfiguriert ist, nach dem Bestimmen einer Position des Vordergrundabschnitts in einem gegenwärtig aufgenommenen Bild, den verarbeiteten Video-Frame mit dem gegenwärtig aufgenommenen Bild zu synthetisieren, um einen synthetisierten Video-Frame zu erzielen.

7. Vorrichtung (331) nach Anspruch 6, wobei
das Erkennungsmodul (41) ferner für Folgendes konfiguriert ist:
Vergleichen eines Farbvektors der spezifizierten Hintergrundfarbe mit Farbvektoren von Pixeln des Video-Frames, um den Vordergrundabschnitt und den Hintergrundabschnitt des Video-Frames zu erkennen.

8. Vorrichtung (331) nach Anspruch 6, wobei das Verarbeitungsmodul (43) in Bezug auf eine Videodatei, die keinen Alphakanal mitführt, ferner für Folgendes konfiguriert ist:
Konfigurieren von Alphakanalwerten für Pixel des Video-Frames gemäß Pixeln, die dem Vordergrundabschnitt entsprechen, und Pixeln, die dem Hintergrundabschnitt entsprechen, um den Hintergrundabschnitt des Video-Frames mit den konfigurierten Alphakanalwerten transparent zu machen.

9. Vorrichtung (331) nach Anspruch 6, wobei das Verarbeitungsmodul (43) in einem Grafikprozessor (310) arbeitet.

10. Vorrichtung (331) nach Anspruch 6, ferner Folgendes umfassend:
ein Erfassungsmodul, das dafür konfiguriert ist, eine virtuelle Komponente zu erfassen, die dem Zielobjekt entspricht, und wobei
das Synthesemodul (44) ferner für Folgendes konfiguriert ist:
Synthetisieren, nach jeweiligem Bestimmen der Position des Vordergrundabschnitts und einer Position der virtuellen Komponente in dem gegenwärtig aufgenommenen Bild, des verarbeiteten Video-Frames und der virtuellen Komponente mit dem gegenwärtig aufgenommenen Bild.

11. Vorrichtung (331) nach Anspruch 6, wobei das Zielobjekt ein händlerbezogenes Bild beinhaltet, das im Vorhinein von einem Zielhändler bereitgestellt wird, und wobei
das Erkennungsmodul (41) ferner für Folgendes konfiguriert ist:
Vergleichen des aufgenommenen Bildes mit dem händlerbezogenen Bild und Erkennen des Zielobjekts aus dem erfassten Bild gemäß einem Ergebnis des Vergleichs.

## Revendications

1. Procédé de traitement vidéo basé sur la réalité augmentée, comprenant :
la réception d'une image relative à un commerçant ;
l'acquisition (101) d'une image capturée par un dispositif, et la reconnaissance d'un objet cible à partir de l'image capturée par comparaison de l'image capturée à l'image relative à un commerçant et reconnaissance de l'objet cible à partir de l'image capturée selon un résultat de la comparaison, l'image relative à un commerçant comportant l'objet cible ;
la recherche (102) d'un fichier vidéo correspondant à l'objet cible, le fichier vidéo possédant une couleur d'arrière-plan spécifiée et ne contenant pas de valeurs de canal alpha ;
la reconnaissance (103), concernant une image vidéo individuelle du fichier vidéo, d'une partie d'avant-plan et d'une partie d'arrière-plan de l'image vidéo individuelle, et le traitement de la partie d'arrière-plan de l'image vidéo individuelle pour rendre transparente la partie d'arrière-plan de l'image vidéo individuelle ;
le calcul d'un canal alpha complet pour rendre transparente la partie d'arrière-plan au moyen d'une unité de traitement graphique, GPU, comprenant :
la conversion de chaque pixel dans une image vidéo individuelle dans un format de code couleur YUV, YCrCb, et le calcul d'un vecteur couleur de chaque pixel ;
le calcul d'un vecteur couleur de la couleur d'arrière-plan spécifiée de la même manière ;
le calcul de la distance entre le vecteur couleur de chaque pixel et le vecteur couleur de la couleur d'arrière-plan spécifiée ; et
l'utilisation en premier lieu d'un algorithme de forçage pour limiter les valeurs des distances à un intervalle, puis l'utilisation d'une interpolation d'Hermite pour interpoler un résultat, et l'utilisation du résultat de l'interpolation comme valeurs de alpha, chacune pour un pixel respectif ;
et
la synthèse (104), suite à la détermination d'une position de la partie d'avant-plan dans une image actuellement capturée, de l'image vidéo individuelle traitée avec l'image actuellement capturée pour obtenir une image vidéo individuelle synthétisée.

2. Procédé selon la revendication 1, dans lequel
la reconnaissance (103) d'une partie d'avant-plan et d'une partie d'arrière-plan de l'image vidéo individuelle comprend :
la comparaison d'un vecteur couleur de la couleur d'arrière-plan spécifiée à des vecteurs couleurs de pixels de l'image vidéo individuelle pour reconnaître la partie d'avant-plan et la partie d'arrière-plan de l'image vidéo individuelle.

3. Procédé selon la revendication 1, dans lequel, concernant un fichier vidéo ne contenant pas un canal alpha, le traitement de la partie d'arrière-plan de l'image vidéo individuelle pour rendre transparente la partie d'arrière-plan de l'image vidéo individuelle comprend :
la configuration, selon des pixels correspondant à la partie d'avant-plan et des pixels correspondant à la partie d'arrière-plan, de valeurs de canal alpha pour des pixels de l'image vidéo individuelle pour rendre transparente la partie d'arrière-plan de l'image vidéo individuelle avec les valeurs de canal alpha configurées.

4. Procédé selon la revendication 1, dans lequel les étapes de reconnaissance (103), concernant une image vidéo individuelle du fichier vidéo, d'une partie d'avant-plan et d'une partie d'arrière-plan de l'image vidéo individuelle et de traitement de la partie d'arrière-plan de l'image vidéo individuelle pour rendre transparente la partie d'arrière-plan de l'image vidéo individuelle sont réalisées par un processeur graphique (310) .

5. Procédé selon la revendication 1, comprenant en outre :
l'acquisition d'un composant virtuel correspondant à l'objet cible ; et
la synthèse, suite à la détermination d'une position de la partie d'avant-plan dans une image actuellement capturée, de l'image vidéo individuelle traitée avec l'image actuellement capturée pour obtenir une image vidéo individuelle synthétisée comprenant :
la synthèse, suite à la détermination respective de la position de la partie d'avant-plan et d'une position du composant virtuel dans l'image actuellement capturée, de l'image vidéo individuelle traitée et du composant virtuel avec l'image actuellement capturée.

6. Appareil de traitement vidéo (331) basé sur la réalité augmentée et configuré pour recevoir une image relative à un commerçant, l'appareil comprenant :
un module de reconnaissance (41), configuré pour acquérir une image capturée par un dispositif, et reconnaître un objet cible à partir de l'image capturée en comparant l'image capturée à l'image relative à un commerçant et en reconnaissant l'objet cible à partir de l'image capturée selon un résultat de la comparaison, l'image relative à un commerçant comportant l'objet cible ;
un module de recherche (42), configuré pour rechercher un fichier vidéo correspondant à l'objet cible, le fichier vidéo possédant une couleur d'arrière-plan spécifiée et ne contenant pas de valeurs de canal alpha ;
un module de traitement (43), configuré pour reconnaître, concernant une image vidéo individuelle du fichier vidéo, une partie d'avant-plan et une partie d'arrière-plan de l'image vidéo individuelle, et traiter la partie d'arrière-plan de l'image vidéo individuelle pour rendre transparente la partie d'arrière-plan de l'image vidéo individuelle, le module de traitement étant configuré en outre pour :
calculer un canal alpha complet pour rendre transparente la partie d'arrière-plan au moyen d'une unité de traitement graphique, GPU, comprenant :
convertir chaque pixel dans une image vidéo individuelle dans un format de code couleur YUV, YCrCb, et calculer un vecteur couleur de chaque pixel ;
calculer un vecteur couleur de la couleur d'arrière-plan spécifiée de la même manière ;
calculer la distance entre le vecteur couleur de chaque pixel et le vecteur couleur de la couleur d'arrière-plan spécifiée ; et
utiliser en premier lieu un algorithme de forçage pour limiter les valeurs des distances à un intervalle, puis utiliser une interpolation d'Hermite pour interpoler un résultat, et utiliser le résultat de l'interpolation comme valeurs de alpha, chacune pour un pixel respectif ; et
un module de synthèse (44), configurée pour synthétiser, suite à la détermination d'une position de la partie d'avant-plan dans une image actuellement capturée, l'image vidéo individuelle traitée avec l'image actuellement capturée pour obtenir une image vidéo individuelle synthétisée.

7. Appareil (331) selon la revendication 6, dans lequel
le module de reconnaissance (41) est configuré en outre pour :
comparer un vecteur couleur de la couleur d'arrière-plan spécifiée à des vecteurs couleurs de pixels de l'image vidéo individuelle pour reconnaître la partie d'avant-plan et la partie d'arrière-plan de l'image vidéo individuelle.

8. Appareil (331) selon la revendication 6, dans lequel, concernant un fichier vidéo ne contenant pas un canal alpha, le module de traitement (43) est configuré en outre pour :
configurer, selon des pixels correspondant à la partie d'avant-plan et des pixels correspondant à la partie d'arrière-plan, des valeurs de canal alpha pour des pixels de l'image vidéo individuelle pour rendre transparente la partie d'arrière-plan de l'image vidéo individuelle avec les valeurs de canal alpha configurées.

9. Appareil (331) selon la revendication 6, dans lequel le module de traitement (43) fonctionne dans un processeur graphique (310).

10. Appareil (331) selon la revendication 6, comprenant en outre :
un module d'acquisition, configuré pour acquérir un composant virtuel correspondant à l'objet cible ; et
le module de synthèse (44) étant configuré en outre pour :
synthétiser, suite à la détermination respective de la position de la partie d'avant-plan et d'une position du composant virtuel dans l'image actuellement capturée, l'image vidéo individuelle traitée et le composant virtuel avec l'image actuellement capturée.

11. Appareil (331) selon la revendication 6, dans lequel l'objet cible comporte une image relative à un commerçant fournie à l'avance par un commerçant cible ; et
le module de reconnaissance (41) est configuré en outre pour :
comparer l'image capturée à l'image relative à un commerçant et reconnaître l'objet cible à partir de l'image capturée selon un résultat de la comparaison.
